# EUROPEAN PATENT APPLICATION

(11) **EP 2 094 005 A2**
(43) Date of publication of application: **26.08.2009**
(21) Application number: 09150853.1
(22) Date of filing: 19.01.2009
(51) Int. Cl.: H04N 5/44

(54) **Controller, control system, and control method**

(30) Priority: 19.02.2008 JP 2008037942
(71) Applicant: Canon Kabushiki Kaisha, Tokyo 146-8501 (JP)
(72) Inventor: Kurosawa, Takahiro, Tokyo, Tokyo 146-8501 (JP)
(74) Representative: TBK-Patent

(57) **Abstract**

A controller(10) has a connection interface used to connect an external device(40), changes an operational profile of an operation means(16) to that according to the external device(40) connected by the connection interface, and controls a host apparatus(20) based on an input operation from the user at the operation means(16), the operational profile of which is changed.

## Description

### BACKGROUND OF THE INVENTION

### Field of the Invention

The present invention relates to a controller for remote-controlling a host apparatus, a control system that comprises the controller, and a control method of controlling the controller.

### Description of the Related Art

### [Remote Controller]

User interface apparatuses for remote-controlling various devices are known. Such user interface apparatus is called a remote controller (to be simply referred to as a controller hereinafter), commander, or the like.

Nowadays, an intelligent controller and learning controller which are designed to control a plurality of devices have been proposed. Most controllers are dedicated apparatuses which are assumed to be used in pairs with control target apparatuses. Communications with control target apparatuses normally use an infrared communication method, and may also use a low-output wireless communication method represented by Bluetooth and UWB (Ultra-Wide band). Controllers in broad sense may often use wired communication methods such as USB (Universal Serial Bus), IEEE1394, and the like (see Japanese Patent Laid-Open No. 2001-136588).

For example, in a controller for a television apparatus, a user interface and signal strength are designed to be able to mainly operate the television apparatus from a distance ranging from about 3 m (10 feet) to 5 m while observing the television screen via infrared communications. In the controller for the television apparatus, the number of buttons increases, and a remote-controller operational profile is complicated as the television apparatus gains advanced functions. Communication data between the controller and control target apparatus is not limited to control information to the control target apparatus (see Japanese Patent Laid-Open No. 11-55764).

### [Camera Direct]

A technique for outputting video data stored in a camera apparatus to a connected device such as a printer apparatus or PC (Personal Computer) by a direct operation at the camera apparatus is known. In particular, the delivery sequence of video data upon connecting the printer apparatus and camera apparatus is standardized as "PictBridge" by the Camera & Imaging Products Association (CIPA). Camera apparatuses comprising a specific button for use of the PictBridge function are also available.

### [Network Storage Technique]

A storage apparatus connected on a network is called a network storage or distributed file system. As related techniques, for example, a UNIX^{™}-based NFS (Network File System) and Windows^{™}-based CIFS (Common Internet File System) are known. Also, an SMB (Server Message Block) protocol and WebDAV (Distributed Authoring and Versioning) defined as expansion of a WWW technique on the Internet are known.

### [Home Network Connection Technique]

The specification of DLNA (Digital Living Network Alliance) assumes video & music delivery use via a home network. In the DLNA, in order to improve connectivity, audio-video codecs and media transfer protocols based on the UPnP specification (including the UPnP AV specification) are strictly specified. In the DLNA home network connection technique, video and music data saved in an HDD (Hard Disk Drive) recorder or a storage device (storage) of a PC are delivery targets. In the DLNA, a media server device that provides video data, a media renderer device that plays back and displays video data, and the like are specified, and a media player device obtained by adding a control point function to the media renderer device and the like is also defined.

### [Camera Adapter]

A camera adapter implements exchange of control information and video data between a camera apparatus connected to a home network or the like, and another device on the home network. The camera adapter not only exchanges video data stored in the camera apparatus but also controls general processing associated with the camera apparatus such as live video capturing, zooming, and the like by the camera apparatus.

In association with the aforementioned technique, for example, video data stored in the camera apparatus may be transmitted to another device on the home network via a television apparatus which comprises a network communication apparatus.

However, in this case, the operation required upon connecting the camera apparatus to the television apparatus, and that of the network communication function of the television apparatus are difficult to understand or they are complicated and troublesome.

As can be seen from the aforementioned controller design for the television apparatus, most users view a television from a position about 3 m (10 feet) from the television apparatus. For this reason, at the time of connection of the camera apparatus to the television apparatus, the user is forced to move that distance, and the aforementioned problems appear further prominently.

### SUMMARY OF THE INVENTION

The present invention enables to provide a technique that connects an external device to a controller, and allows the user to use the external device using various functions of a host apparatus by remote control from the controller.

According to a first aspect of the present invention there is provided a controller according to claims 1 to 10.

According to a second aspect of the present invention there is provided a control system according to claim 11.

According to a third aspect of the present invention there is provided a method according to claim 12.

Further features of the present invention will be apparent from the following description of exemplary embodiments with reference to the attached drawings.

### BRIEF DESCRIPTION OF THE DRAWINGS

Fig. 1 is a block diagram showing an example of the overall arrangement according to one embodiment of the present invention;

Fig. 2 is a block diagram showing an example of the hardware arrangement of a controller 10;

Fig. 3 is a block diagram showing an example of the hardware arrangement of a television apparatus 20;

Fig. 4 is a block diagram showing an example of the hardware arrangement of an external storage apparatus 30;

Fig. 5 is a block diagram showing an example of the hardware arrangement of a camera apparatus 40;

Fig. 6 is a block diagram showing an example of the functional arrangements implemented in the respective apparatuses shown in Fig. 1;

Fig. 7 is a flowchart showing an example of the sequence of the operation in a control point unit 61 of the controller 10;

Fig. 8 is a flowchart showing an example of the sequence of the operation in a camera adapter unit 73 of the television apparatus 20;

Fig. 9 is a flowchart showing an example of the sequence of the operation in a video acquisition unit 72 of the television apparatus 20;

Fig. 10 is a flowchart showing an example of the sequence of the operation in a display output unit 71 of the television apparatus 20;

Fig. 11 is a flowchart showing an example of the sequence of the operation in an input control unit 51 of the camera apparatus 40;

Fig. 12 is a flowchart showing an example of the sequence of the operation in a display output unit 52 of the camera apparatus 40;

Fig. 13 is a flowchart showing an example of the sequence of the operation in a video management unit 53 of the camera apparatus 40;

Fig. 14 is a flowchart showing an example of the sequence of the operation in a video management unit 81 of the external storage apparatus 30;

Figs. 15A and 15B are views showing examples of a screen display by the display output unit 71 of the television apparatus 20;

Fig. 16 is a block diagram showing an example of the overall arrangement according to the second embodiment;

Fig. 17 is a block diagram showing an example of the hardware arrangement of a camera apparatus 40 according to the second embodiment;

Fig. 18 is a first view showing an example of a modification;

Fig. 19 is a second view showing an example of the modification; and

Fig. 20 is a third view showing an example of the modification.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

In the embodiments to be described hereinafter, a case will be exemplified wherein an external device is a camera apparatus, and a host apparatus is a television apparatus.

### (First Embodiment)

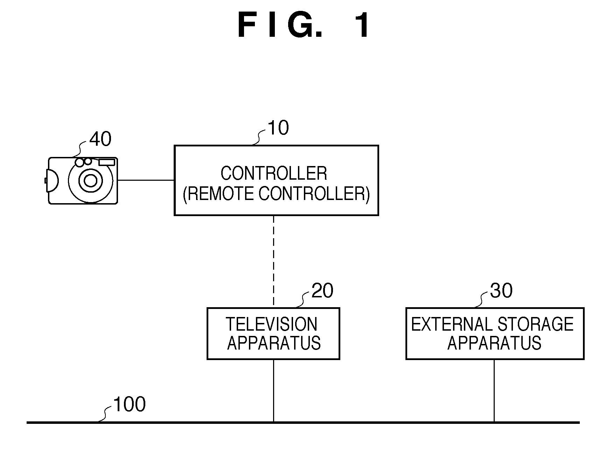

Fig. 1 is a block diagram showing an example of the overall arrangement according to one embodiment of the present invention.

Reference numeral 10 denotes a remote controller (to be simply referred to as a controller hereinafter); 20, a television apparatus; 30, an external storage apparatus; and 40, a camera apparatus. The camera apparatus 40 and controller 10 are connected via, for example, USB, and the controller 10 and television apparatus 20 are wirelessly connected via, for example, Bluetooth. The television apparatus 20 and external storage apparatus 30 are connected via, for example, a network 100.

The controller 10 is associated with the television apparatus 20, and changes receiving channels of terrestrial broadcast waves and the like to be displayed on the television apparatus 20 based on an input operation from the user. Note that the controller 10 may be of a type that can control a plurality of control target apparatuses. The controller 10 has an external device connection interface. To this interface, an external device such as the camera apparatus 40 is connected.

The television apparatus 20 comprises an external device adapter function (a camera adapter function in this embodiment). The external device adapter function of the television apparatus 20 functions with respect to the external device connected to the controller 10 based on remote control from the controller 10. Note that the external device adapter function in the television apparatus 20 may be implemented by either a built-in device or external device.

In such an arrangement, upon detection of connection of the camera apparatus 40 to the controller 10, the controller 10 serves as a control point for controlling the camera adapter function of the television apparatus 20. As a result, exchange of video data and the like between the camera apparatus 40 and the television apparatus 20 or external storage apparatus 30 is implemented under the control of the controller 10.

An example of the overall arrangement has been described. Note that the network 100 may comprise an intranet managed in a company or organization or the worldwide Internet. Furthermore, the network 100 may comprise a home network that connects home devices, or a network that connects outdoor devices. The network 100 may use wireless connection such as IEEE802.11 or Bluetooth, or may use wired connection such as a network superposed on a power line (Power Line Communications) or IEEE802.3. That is, the connection mode is not particularly limited as long as communications can be implemented between two apparatuses. Likewise, communications between the camera apparatus 40 and controller 10 may use IEEE1394 and UWB in place of USB. Furthermore, as for communications between the controller 10 and television apparatus 20, the connection mode is not particularly limited as long as these apparatuses can communicate with each other.

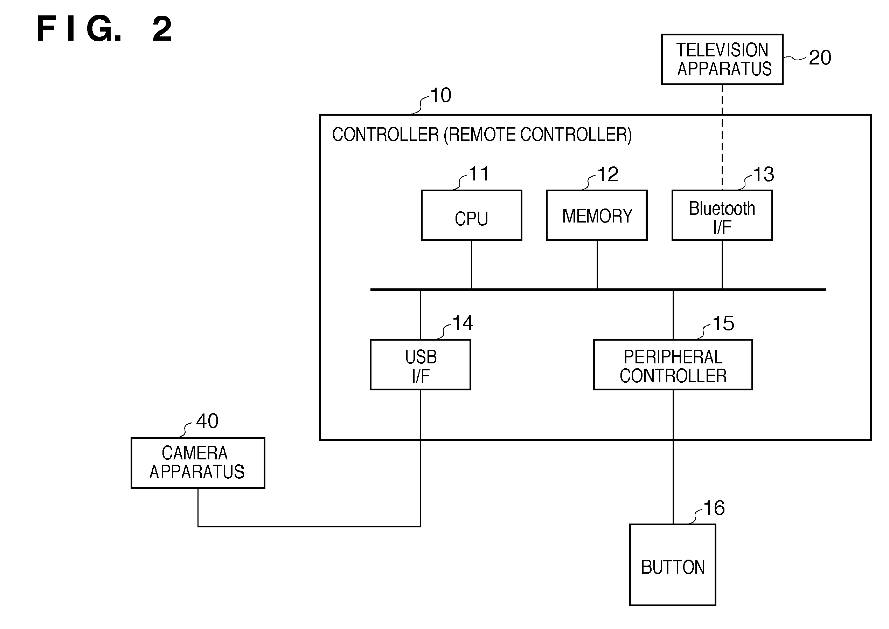

The hardware arrangements in the respective apparatuses shown in Fig. 1 will be described below using Figs. 2 to 4.

Fig. 2 is a block diagram showing an example of the hardware arrangement of the controller 10.

The controller 10 comprises a CPU 11, memory 12, Bluetooth I/F 13, USB I/F 14, peripheral controller 15, and buttons 16.

The memory 12 stores various programs and data, and the CPU 11 systematically controls processing in the controller 10. The CPU 11 executes control based on programs stored in, for example, the memory 12. Note that the memory 12 may comprise, for example, a nonvolatile memory such as an HDD or flash memory in addition to a RAM (Random Access Memory).

The Bluetooth I/F 13 connects the controller 10 and television apparatus 20, and exchanges various data. As described above, an interface that connects the controller 10 and television apparatus 20 is not limited to Bluetooth. For example, an IrDA (Infrared Data Association) or WLAN (Wireless LAN) interface may be used. For example, when the IrDA interface is used, the controller 10 comprises an infrared communication I/F in place of the Bluetooth I/F 13.

The USB I/F 14 is an interface used to connect an external device. In this embodiment, the USB I/F 14 connects the controller 10 and camera apparatus 40 and exchanges video data and control information required to control the camera apparatus 40. As described above, an interface that connects the controller 10 and camera apparatus 40 is not limited to USB. For example, IEEE1394 may be used. In this case, the controller 10 comprises an IEEE1394 I/F in place of the USB I/F 14.

A plurality of buttons 16 are arranged on the controller 10, and include, for example, numeric buttons (channel buttons), arrow buttons (direction buttons), color buttons (blue, red, green, and yellow), and tone volume buttons. The peripheral controller 15 controls inputs from the buttons 16 and the like. For example, the peripheral controller 15 individually identifies the input buttons 16 operated by the user.

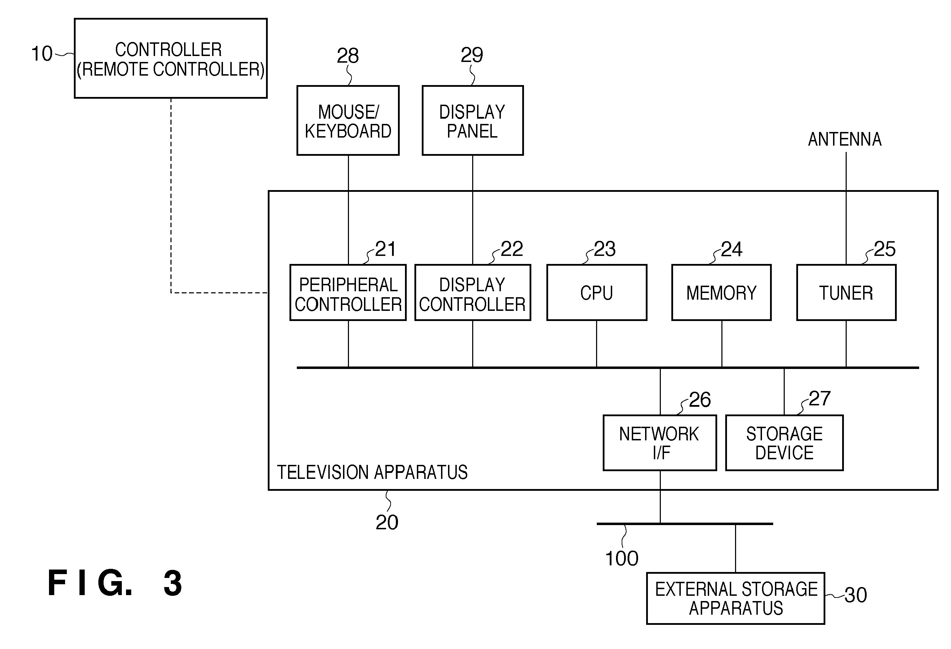

Fig. 3 is a block diagram showing an example of the hardware arrangement of the television apparatus 20.

The television apparatus 20 comprises a peripheral controller 21, display controller 22, CPU 23, memory 24, tuner 25, network I/F 26, storage device 27, mouse/keyboard 28, and display panel 29.

The memory 24 stores various programs and data, and the CPU 23 systematically controls processing in the television apparatus 20. The CPU 23 executes control based on programs stored in, for example, the memory 24. Note that the memory 24 may comprise, for example, a nonvolatile memory such as an HDD or flash memory in addition to a RAM.

The network I/F 26 connects the television apparatus 20 and network 100. The television apparatus 20 communicates with, for example, the external storage apparatus 30 via the network I/F 26. Note that the network I/F 26 is not limited to a wired or wireless interface.

The display controller 22 outputs various processing results and video data to the display panel 29 to display them, and the peripheral controller 21 controls inputs from an input unit such as the mouse/keyboard 28, and also communications with the controller 10 via Bluetooth or the like. In this case, the peripheral controller 21 is connected to the keyboard/mouse 28 and controller 10. A control target peripheral device of the peripheral controller 21 may be an LED (Light Emitting Diode) controller or an external sensor input/output controller. Note that the keyboard/mouse 28 may be omitted.

The storage device 27 stores various data including video data and the like. The storage device 27 also assists the memory 24. The tuner 25 receives terrestrial broadcast waves and satellite broadcast waves, and extracts predetermined broadcast data (which may include not only video data but also program table information, various kinds of control information, and a control program of the television apparatus 20 itself).

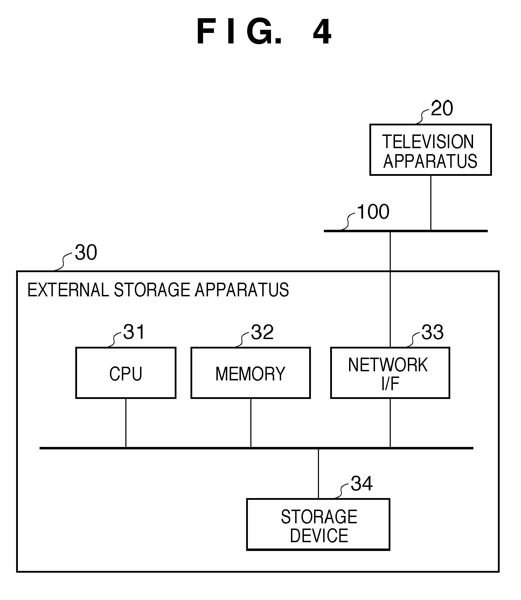

Fig. 4 is a block diagram showing an example of the hardware arrangement of the external storage apparatus 30.

The external storage apparatus 30 has a network storage function, and comprises a CPU 31, memory 32, network I/F 33, and storage device 34.

The memory 32 stores various programs and data, and the CPU 31 systematically controls processing in the external storage apparatus 30. The CPU 31 executes control based on programs stored in, for example, the memory 32. Note that the memory 32 may comprise, for example, a nonvolatile memory such as an HDD or flash memory in addition to a RAM.

The network I/F 33 connects the external storage apparatus 30 and network 100. The external storage apparatus 30 communicates with, for example, the television apparatus 20 via the network I/F 33. Note that the network I/F 33 is not limited to a wired or wireless interface.

The storage device 34 stores various data including video data and the like. The storage device 34 also assists the memory 32. The storage device 34 comprises a nonvolatile memory such as a large-capacity HDD or flash memory, and may comprise a RAID (Redundant Arrays of Inexpensive Disks) arrangement and search accelerator.

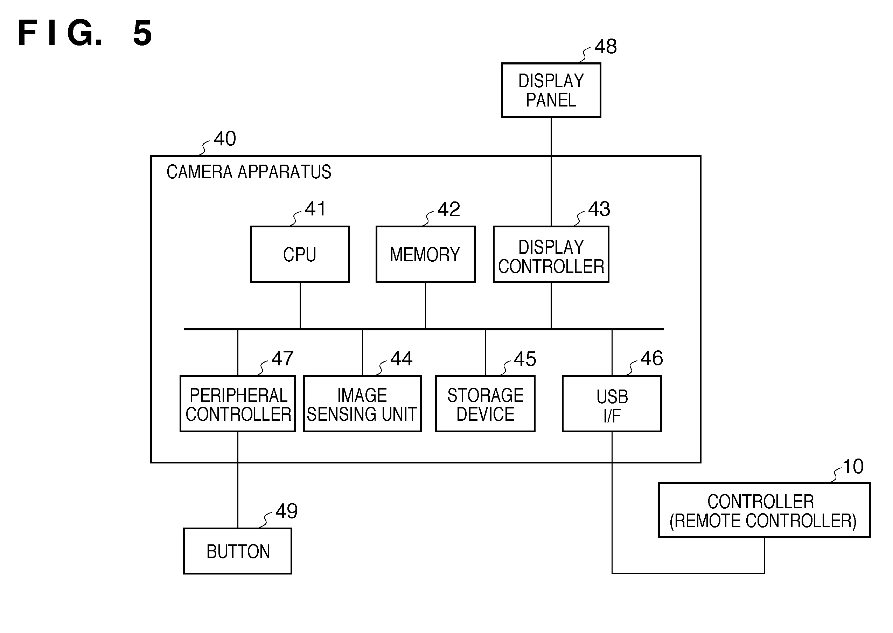

Fig. 5 is a block diagram showing an example of the hardware arrangement of the camera apparatus 40.

The camera apparatus 40 comprises a CPU 41, memory 42, display controller 43, image sensing unit 44, storage device 45, USB I/F 46, peripheral controller 47, display panel 48, and buttons 49.

The memory 42 stores various programs and data, and the CPU 41 systematically controls processing in the camera apparatus 40. The CPU 41 executes control based on programs stored in, for example, the memory 42. Note that the memory 42 may comprise, for example, a nonvolatile memory such as an HDD or flash memory in addition to a RAM.

The display controller 43 outputs various processing results and video data to the display panel 48 to display them. The USB I/F 46 connects the camera apparatus 40 and controller 10, and exchanges video data and control information required to control the camera apparatus 40. The image sensing unit 44 comprises a lens, lens driving system, optical sensor, and the like.

A plurality of buttons 49 are arranged on the camera apparatus 40, and include, for example, a round button, operation dial, and shutter button. The peripheral controller 47 controls inputs from the buttons 49 and the like. For example, the peripheral controller 47 individually identifies the input buttons 49 operated by the user.

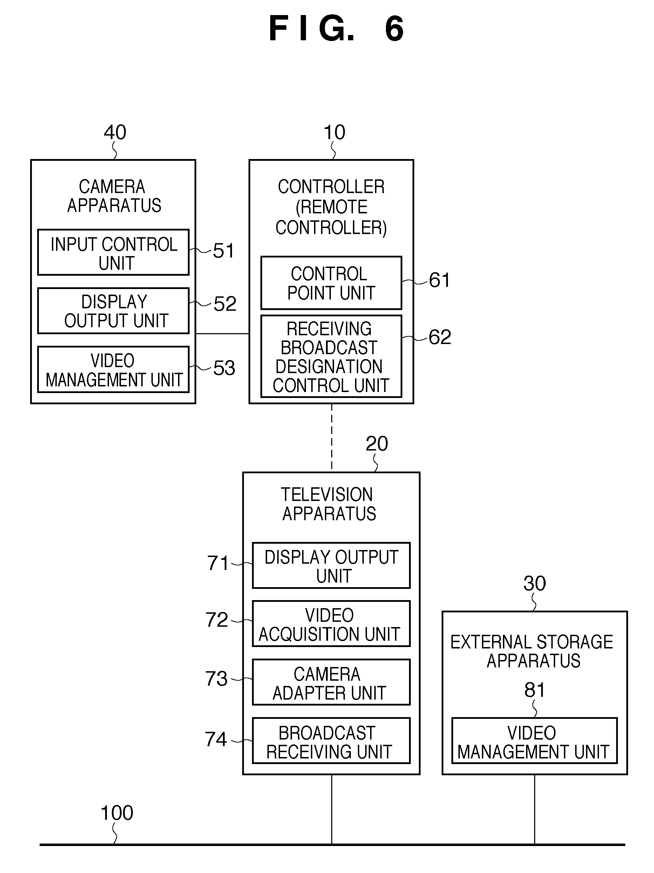

Fig. 6 is a block diagram showing an example of the functional arrangements implemented in the respective apparatuses shown in Fig. 1. Note that the functional arrangement implemented in each apparatus may be implemented when the CPU in that apparatus executes programs stored in the memory and the like, or may be implemented by the hardware arrangement in that apparatus described above using Figs. 2 to 5.

The controller 10 comprises, as the functional arrangement, a control point unit 61 and receiving broadcast designation control unit 62.

The control point unit 61 controls a camera adapter unit 73 of the television apparatus 20 based on an input operation from the user via the buttons 16. This control is executed when a request according to the instruction content based on the input operation from the user is transmitted to the camera adapter unit 73.

The receiving broadcast designation control unit 62 controls a broadcast receiver 74 of the television apparatus 20 based on an input operation from the user via the buttons 16. That is, the receiving broadcast designation control unit 62 transmits control information based on a user's channel operation toward the television apparatus 20 to change a receiving channel of the television apparatus 20.

The television apparatus 20 comprises, as the functional arrangement, a display output unit 71, a video acquisition unit 72, the camera adapter unit 73, and the broadcast receiver 74.

The display output unit 71 outputs video pictures and various screens to the display panel 29 to display them. The display output unit 71 displays video pictures based on the terrestrial broadcast waves or satellite broadcast waves received by the broadcast receiver 74, and displays various screens based on video data, control information, and the like passed from the video acquisition unit 72 and camera adapter unit 73.

The video acquisition unit 72 acquires video data from another apparatus connected to the network. The broadcast receiver 74 receives the terrestrial broadcast waves or satellite broadcast waves, and receives broadcast data of a receiving channel designated by the user. As described above, the receiving channel is designated using the controller 10 or the like.

The camera adapter unit 73 controls general processing associated with the camera apparatus 40. For example, the camera adapter unit 73 receives various requests from the control point unit 61 of the controller 10, and sends control information to the camera apparatus 40 or exchanges video data with the camera apparatus 40 in response to these requests.

Note that the television apparatus 20 may comprise a printer adapter unit which controls processing associated with a printer apparatus at the time of connection of the printer apparatus, a storage adapter unit which controls processing associated with a storage apparatus at the time of connection of the storage apparatus, and the like, in addition to the camera adapter unit 73. In this case, the controller 10 associated with the television apparatus 20 comprises control point units 61 corresponding to these printer adapter unit and storage adapter unit.

The external storage apparatus 30 comprises, as the functional arrangement, a video management unit 81.

The video management unit 81 manages video data using the storage device 34. The video management unit 81 provides the managed video data in response to a save request, browse request, and search request from another apparatus connected to the network.

The camera apparatus 40 comprises, as the functional arrangement, an input control unit 51, display output unit 52, and video management unit 53.

The input control unit 51 executes input control based on an input operation from the user via the buttons 49. When the input control unit 51 accepts an input operation from the user after connection to the controller 10 is established, it transmits an input operation message indicating that input operation to the control point unit 61 of the controller 10. Note that input control by the input control unit 51 before connection to the controller 10 is established is the same as that of the normal camera apparatus, and control for transmitting input information to the control point unit 61 of the controller 10 is not executed.

The display output unit 52 outputs various screens to the display panel 29 to display them. After connection to the controller 10 is established, the display output unit 52 outputs video data such as text and graphs to the display panel 48 to display them under the control of the control point unit 61 of the controller 10. The display output by the display output unit 52 before connection to the controller 10 is established is the same as that of the normal camera apparatus.

The video management unit 53 manages video data using the storage device 45. The video management unit 53 manages video data received from the network based on a save instruction of the camera adapter unit 73 of the television apparatus 20, video data sensed by the camera apparatus 40 based on an image sensing instruction from the camera adapter unit 73 of the television apparatus 20, and the like. After connection to the controller 10 is established, the video management unit 53 provides, based on a browse instruction from the control point unit 61 of the controller 10 or from the camera adapter unit 73 of the television apparatus 20, video data to the instruction transmission source. Management of video data by the video management unit 53 before connection to the controller 10 is established is the same as that of the normal camera apparatus.

The operations in the controller 10, television apparatus 20, and camera apparatus 40 shown in Fig. 1 will be described below. Since the operations of the receiving broadcast designation control unit 62 of the controller 10 and the broadcast receiver 74 of the television apparatus 20 are the same as those of the general controller and television apparatus, a description thereof will not be given.

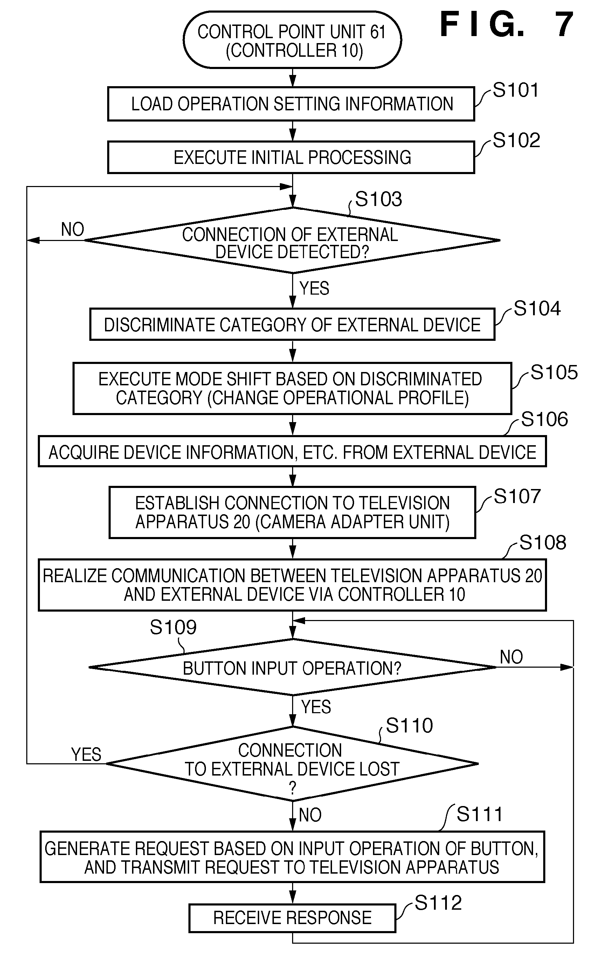

Fig. 7 is a flowchart showing the sequence of the operation in the controller 10. An example of the sequence of the operation in the control point unit 61 will be described below.

Upon startup, the control point unit 61 loads operation setting information for itself from a specific file (a system database such as a registry depending on an OS) (step S101). After that, the control point unit 61 operates based on that operation setting information.

Note that the operation setting information to be loaded includes, for example, (1) communication information (including Bluetooth lower connection information, authentication information, and the like) with the television apparatus 20 associated with the controller 10, (2) information indicating categories of connectable external devices, (3) information that specifies the number of connectable external devices in correspondence with the categories of the external devices, (4) information (e.g., to shift the camera apparatus to the PictBridge mode) indicating automatic processing designation at the time of connection, (5) operation setting information of the camera adapter unit 73 of the television apparatus 20, (6) an item list to be exchanged as information at the time of connection of the camera adapter unit 73 of the television apparatus 20, (7) mapping between various buttons arranged on the controller 10 and the functions of the control point unit 61, and the like.

The control point unit 61 executes initial processing according to this operation setting information (step S102). The control point unit 61 then detects connection of an external device. This detection processing is continuously executed until connection of an external device is detected (NO in step S103).

If connection of an external device is detected (YES in step S103), the control point unit 61 discriminates the category of the connection-detected external device (step S104). The category is discriminated using device classes and subclasses defined by the USB-IF (Universal Serial Bus Implementers Forum, Inc.). For example, if an SIC (Still Image Capture) device class is detected, it is discriminated that a camera apparatus is connected. The following description will be given under the assumption that the camera apparatus 40 is detected as the external device.

After the category discrimination, the control point unit 61 shifts to a mode according to the category of the connection-detected device (step S105). For example, if it is discriminated that the category of the external device indicates a camera apparatus, the control point unit 61 shifts to a control point mode for the camera apparatus. As a result, in the controller 10, input information from each button arranged on the controller 10 is supplied to the control point unit 61 in place of the receiving broadcast designation control unit 62. That is, the button input operation to the controller 10 at the time of connection of the camera apparatus 40 is interpreted by the control point unit 61. In this case, the roles of respective buttons arranged on the controller 10 are changed to change its operational profile. More specifically, an operational profile used to designate a receiving channel is changed to that used to execute control associated with the camera apparatus 40 (changed to an operational profile at the time of connection of the external device).

After the mode shift processing, the control point unit 61 acquires device information from the connection-detected external device (step S106). For example, if the external device is the camera apparatus 40, the control point unit 61 acquires a camera model, camera identifier, owner information, and storage medium identifier (identification information of a detachable storage medium such as a memory card) from the camera apparatus 40. The device information acquired from the camera apparatus 40 also includes operation setting information of the camera adapter unit 73 of the television apparatus 20, that of the control point unit 61 for the camera apparatus 40, and the like. At this time, the control point unit 61 temporarily overwrites the operation setting information loaded in step S101 by the acquired operation setting information of the control point unit 61 for the camera apparatus 40. The control point unit 61 then operates based on the overwritten operation setting information.

The control point unit 61 then establishes connection to the camera adapter unit 73 of the television apparatus 20 (step S107). A television apparatus as a connection target is the television apparatus 20 associated with the controller 10 as the control target apparatus. Upon execution of this connection processing, the control point unit 61 transmits the information includes the camera identifier and the like acquired in step S106 to the camera adapter unit 73 of the television apparatus 20. The control point unit 61 may request the television apparatus 20 to send the operation setting information of the camera adapter unit 73, and may operate after it overwrites the existing operation setting information by that operation setting information if necessary.

The control point unit 61 acquires, from the television apparatus 20, setting information, for example, network identification information (e.g., an IP address or uuid) and connection information (port number) to the camera adapter unit 73, and transmits the acquired information to the camera apparatus 40. The camera apparatus 40 operates based on this setting information, and starts a communication with the television apparatus 20. That is, this information exchange implements a communication between the camera apparatus 40 and the camera adapter unit 73 of the television apparatus 20 under the control of the controller 10 (step S108).

Upon completion of the aforementioned series of processes, the control point unit 61 waits for a button input operation (NO in step S109). That is, the control point unit 61 waits until the user makes an input operation of any of the buttons 16 arranged on the controller 10. Note that the control point unit 61 may wait for a button input operation which includes not only the input operation from the buttons 16 arranged on the controller 10 but also that from the buttons 49 arranged on the camera apparatus 40. In this case, the control point unit 61 detects a button input operation on the camera apparatus 40 by receiving an input operation message from the camera apparatus 40.

If the user makes a button input operation (YES in step S109), the control point unit 61 that received the operation confirms if the connection with the camera apparatus 40 is lost. If the connection is lost (YES in step S110), the process returns to step S103. If the connection with the camera apparatus 40 is lost, the mode shift processing executed in step S105 is canceled. That is, the mode is changed to supply an input operation from the buttons 16 arranged on the controller 10 to the receiving broadcast designation control unit 62, and the operational profile of the controller 10 is restored.

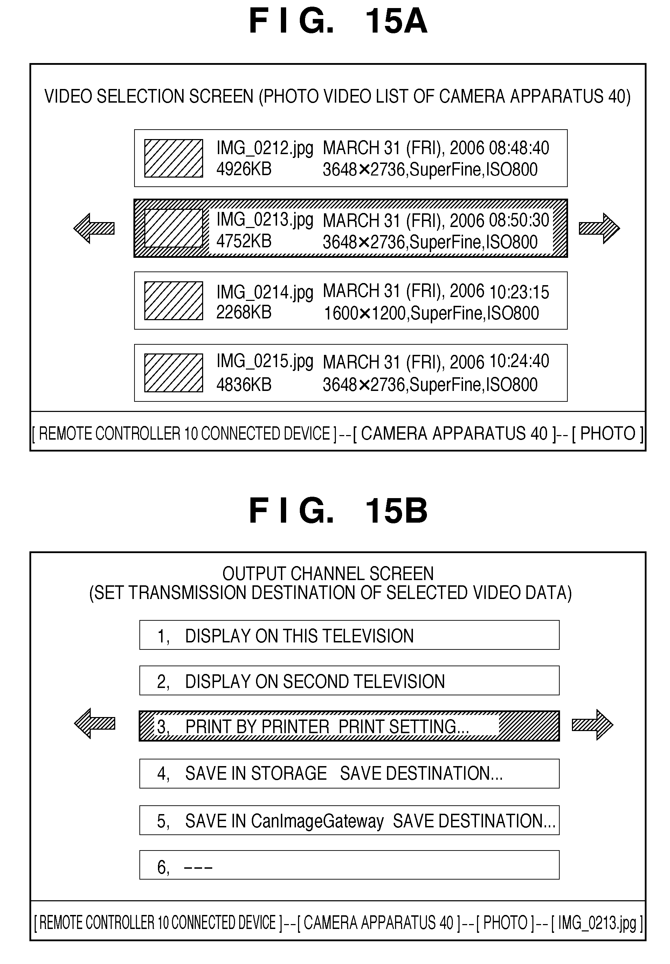

If the connection with the camera apparatus 40 is maintained (NO in step S110), the control point unit 61 generates an instruction content based on the button input operation as a request to be sent to the camera adapter unit 73, and transmits that request to the camera adapter unit 73 of the television apparatus 20 (step S111). Note that various instructions may be transmitted to the camera apparatus 40 in place of the camera adapter unit 73 depending on the contents of button input operations. Upon execution of this processing, the display panel 29 of the television apparatus 20 displays a screen shown in, for example, Fig. 15A or 15B. The user makes a button input operation from the controller 10 with reference to this displayed screen.

After that, the control point unit 61 receives a response corresponding to the request in step S111 from the camera adapter unit 73 of the television apparatus 20 (step S112). The control point unit 61 updates, for example, the self internal status based on this received response. The process returns to step S109 to wait for a button input operation.

In the description of Fig. 7, one external device is connected to the controller 10. However, a plurality of external devices may be simultaneously connected to the controller 10. Although a detailed description of such case will not be given, for example, the control point unit 61 may independently process the processing described using Fig. 7 using a multi-task technique. Also, the television apparatus 20 side may display a screen while dividing it for respective external devices. At this time, when camera identifiers and the like are displayed in correspondence with the divided areas, correspondence between the external devices and divided areas can be presented to the user. Note that the plurality of external devices connected at the same time may have different categories. For example, a printer apparatus and camera apparatus may be connected at the same time.

In the description of Fig. 7, the control point unit 61 acquires the network identification information from the television apparatus 20 at the time of connection of the camera apparatus 40, and transmits the acquired information to the camera apparatus 40 (see step S108). However, the timing of this processing is not limited to the aforementioned timing. For example, the network identification information of the television apparatus 20 may be held in advance as the operation setting information of the control point unit 61, and may be transmitted to the camera apparatus 40.

In the description of Fig. 7, transmission of the request to the camera adapter unit 73 and reception of the corresponding response are synchronously executed (see steps S111 and S112). However, this processing may be asynchronously executed.

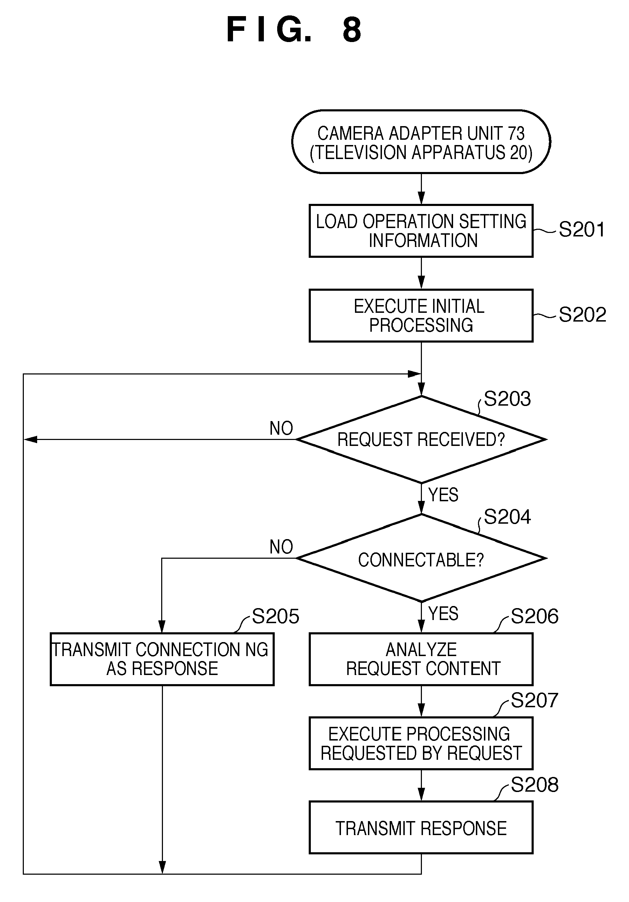

The sequence of the operation in the television apparatus 20 will be described below using Figs. 8 to 10. An example of the sequence of the operation in the camera adapter unit 73 will be described first using Fig. 8.

Upon startup, the camera adapter unit 73 loads operation setting information for itself from a specific file (a system database such as a registry depending on an OS) (step S201). After that, the camera adapter unit 73 operates based on that operation setting information.

Note that the operation setting information to be loaded in this case includes, for example, (1) communication information (including Bluetooth lower connection information, authentication information, and the like) with the controller 10 associated with the television apparatus 20, (2) communication information (an IP address and gateway information) with another apparatus connected via the network, (3) a connection permission list and connection rejection list (IP addresses or MAC addresses), (4) information (displayable request types, a display layout, and the like) indicating display options to the display panel 29, (5) information (e.g., to shift the camera apparatus to the PictBridge mode) indicating automatic processing designation at the time of camera connection, and the like.

The camera adapter unit 73 executes initial processing according to this operation setting information (step S202). In the initial processing, for example, the camera adapter unit 73 opens a communication port used to accept requests from the control point unit 61 of the controller 10 and other apparatuses on the network. Next, the camera adapter unit 73 waits for reception of a request (NO in step S203). The request is sent from, for example, the control point unit 61 of the controller 10.

Upon reception of the request (YES in step S203), the camera adapter unit 73 determines whether the connection of the corresponding apparatus is OK or NG. In case of the second or subsequent connection from the identical apparatus, the previous determination result may be used. If the connection is NG (NO in step S204), the camera adapter unit 73 returns an error code indicating connection rejection to the request transmission source as a response (step S205), and the process returns to step S203.

If the connection is OK (YES in step S204), the camera adapter unit 73 analyzes the content of the received request (step S206). The request content is analyzed to specify, for example, the type and video source information (e.g., browse information in the video management unit 53 of the camera apparatus 40) of requested video data, camera control parameters, and the like. Furthermore, the request content is analyzed to decide a delivery protocol of a response and the like.

After completion of the analysis of the request content, the camera adapter unit 73 executes processing requested by the request (step S207). For example, when the request requests to acquire video data in the camera apparatus 40, the camera adapter unit 73 issues a browse request to the video management unit 53 of the camera apparatus 40 via the controller 10 so as to acquire the video data. Note that the video acquisition unit 72 acquires the video data under the control of the camera adapter unit 73. The request may request to change the operation setting information of the camera adapter unit 73. In this case, the camera adapter unit 73 temporarily overwrites the operation setting information loaded in step S201 by the requested information, and the process returns to step S203.

Upon completion of this processing, the camera adapter unit 73 transmits a response to the request transmission source using the delivery protocol requested by the request received in step S203 (step S208). The response includes, for example, video data or information such as the processing result. Note that a response may be returned to another apparatus on the network other than the request transmission source depending on the request content. For example, when the control point unit 61 of the controller 10 issues a print request, since the request designates a printer apparatus as the transmission destination of video data, the response is returned to the printer apparatus. Note that the processes in steps S207 and S208 are respectively executed by independent threads, and partial data of video data undergoes pipeline (video streaming) processing depending on the type of video data and delivery protocol. After the response is transmitted, the camera adapter unit 73 returns the process to step S203.

In the description of Fig. 8, screen display on the display panel 29 is not mentioned. However, screens that reflect the operation processes in respective execution steps are displayed as needed in collaboration of the camera adapter unit 73 and display output unit 71. Note that this display is made independently of that based on the terrestrial broadcast waves and the like received by the broadcast receiver 74. This may use, for example, a prevalent multi-plane display technique and alpha blending technique. With these techniques, images are output to different rendering planes, which are superimposed to have an appropriate blending ratio and superimposing order.

The screen displayed in collaboration of the camera adapter unit 73 and display output unit 71 displays information associated with, for example, the operation of the camera apparatus 40. For example, information of the request transmission source and the request content, the response content, and information associated with another apparatus connected to the network are also displayed. When list display of video data in the camera apparatus 40 is requested by a request, for example, a selection screen of video data shown in Fig. 15A is displayed. On the other hand, when list display of other apparatuses on the network as the transmission destinations of video data is requested by a request, for example, a selection screen shown in Fig. 15B is displayed. When the screen shown in Fig. 15A is displayed, the user selects video data (photo) to be processed from the list by an input operation from the controller 10. After that, the user selects an apparatus as the transmission destination of the selected video data from the list displayed on the screen shown in Fig. 15B by an input operation from the controller 10. For example, when the user inputs a "4 (channel)" button arranged on the controller 10, the selected video data is transmitted to and is saved in the external storage apparatus 30. On the other hand, for example, when the user inputs a "3 (channel)" button arranged on the controller 10, the selected video data is transmitted to and is printed by the printer apparatus. Note that the transmission destinations of video data to be displayed on the screen shown in Fig. 15B may be detected by the camera adapter unit 73, or may be set in advance in the camera adapter unit 73.

In the description of Fig. 8, the received request undergoes batch processing (see step S203). Of course, a plurality of requests may undergo parallel processing. Note that the same applies to another apparatus to be described later (for example, the external storage apparatus 30).

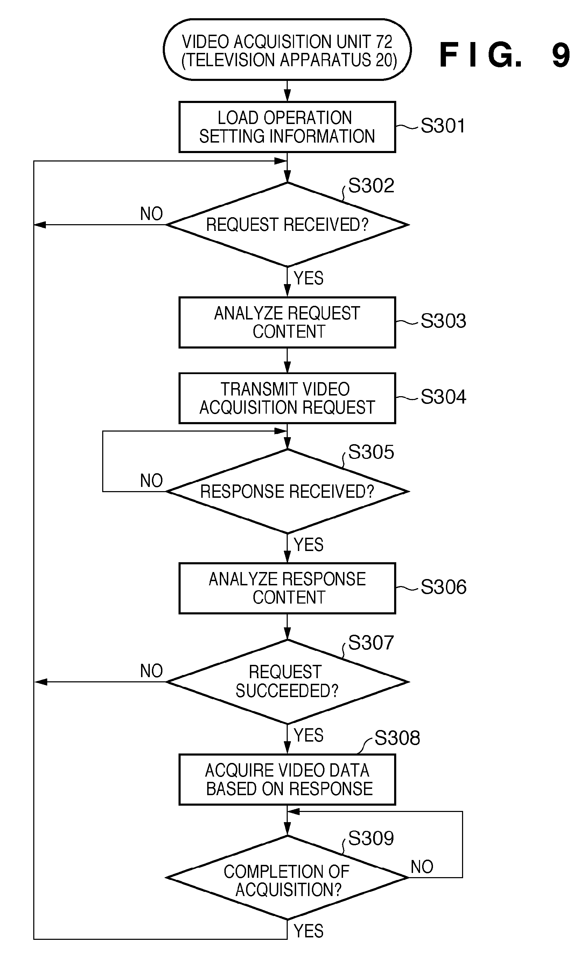

An example of the sequence of the operation in the video acquisition unit 72 will be described below using Fig. 9.

Upon startup, the video acquisition unit 72 loads operation setting information for itself from a specific file (a system database such as a registry depending on an OS) (step S301). After that, the video acquisition unit 72 operates based on that operation setting information.

The video acquisition unit 72 waits for reception of a request until a request is transmitted from the control point unit 61 of the controller 10 (NO in step S302). This request is received via the camera adapter unit 73. Note that the request includes information such as identification information (e.g., an IP address or uuid) of another apparatus on the network, which stores video data, the type and video source information (including identification information and a search condition in a designated device) of video data, a communication protocol, and the processing method of a received video picture.

Upon reception of a request (YES in step S302), the video acquisition unit 72 analyzes the content of the received request (step S303), and executes processing based on the analysis result. More specifically, the video acquisition unit 72 establishes connection to another apparatus on the network as a video data storage source requested by the request, and transmits a video acquisition request to that apparatus, to which connection is established, using the designated communication protocol (step S304). For example, the video acquisition unit 72 establishes connection to the external storage apparatus 30, and transmits a request that requests to acquire video data using an ftp protocol (ftp-get request).

The video acquisition unit 72 then waits until a response to the request in step S304 is received (NO in step S305). If the response is received (YES in step S305), the video acquisition unit 72 analyzes the content of that response (step S306). As a result of this analysis, OK or NG (success or failure) of the request, a response transmission method, response size, and the like are specified. If the request in step S304 has failed (NO in step S307), the process returns to step S302.

If the request has succeeded (YES in step S307), the video acquisition unit 72 acquires (receives) video data based on the response (step S308). Note that the video data may be divisionally received in a plurality of times. After that, the video acquisition unit 72 waits for completion of acquisition (reception) of the video data (YES in step S309), and the process returns to step S302.

In the description of Fig. 9, the video acquisition unit 72 transmits (issues) a request to the acquisition source of video data (see step S304). Alternatively, the control point unit 61 of the controller 10 may directly issue this request. In this case, the processes in steps S302 to S304 are skipped, and the processing starts from step S305.

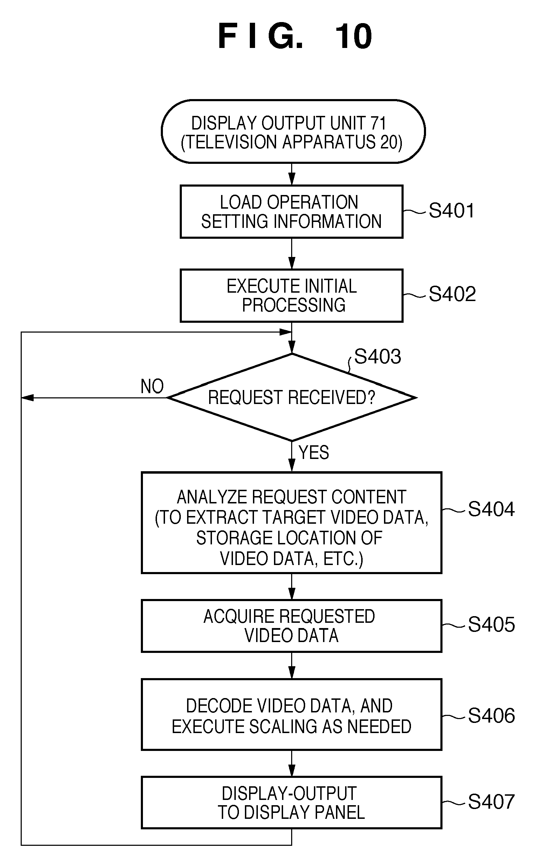

An example of the sequence of the operation in the display output unit 71 will be described below using Fig. 10. Note that the sequence of the operation upon making display based on video data, control information, and the like passed from the video acquisition unit 72 or camera adapter unit 73 will be explained. Since the sequence of the operation upon making display based on terrestrial broadcast waves and the like is known, a description thereof will not be given.

Upon startup, the display output unit 71 loads operation setting information for itself from a specific file (a system database such as a registry depending on an OS) (step S401). After that, the display output unit 71 operates based on that operation setting information.

In this case, the display output unit 71 executes initial processing according to this operation setting information (step S402). In the initial processing, for example, the display output unit 71 opens a communication port used to accept requests from the control point unit 61 of the controller 10 and the like. The display output unit 71 waits for reception of a request until a request is transmitted from the control point unit 61 of the controller 10 (NO in step S403). This request is received via the camera adapter unit 73.

Upon reception of a request (YES in step S403), the display output unit 71 analyzes the content of the received request, and extracts a video source device that stores video data as a display output target, and a video data identifier that indicates the video data (step S404). Then, the video acquisition unit 72 acquires the video data from the extracted video source device (step S405). For example, when the video source device is the television apparatus 20 itself, the video acquisition unit 72 opens a video channel (broadcast receiving channel) received by the broadcast receiver 74 of the television apparatus 20 using the video data identifier as a key and acquires the video data. On the other hand, when the video source device is the camera apparatus 40, the video acquisition unit 72 acquires the video data from the video management unit 53 of the camera apparatus 40 via the controller 10. Furthermore, when the video source device is the external storage apparatus 30, the video acquisition unit 72 acquires the video data from the video management unit 81 of the external storage apparatus 30.

After the video data is acquired, the display output unit 71 decodes the video data based on attribute information and display parameters of the video data designated by the request, and parameters included in the video data itself. Also, the display output unit 71 executes scaling of the video data as needed (step S406). The display output unit 71 outputs the processed video data to the display panel 29 to display it (step S407).

Note that the processes in steps S406 and S407 are executed by independent threads, and partial data of the video data undergoes pipeline (video streaming) processing depending on the type of video data and the video source device. In this case, the display output unit 71 maintains these threads until processes for the video data are completed.

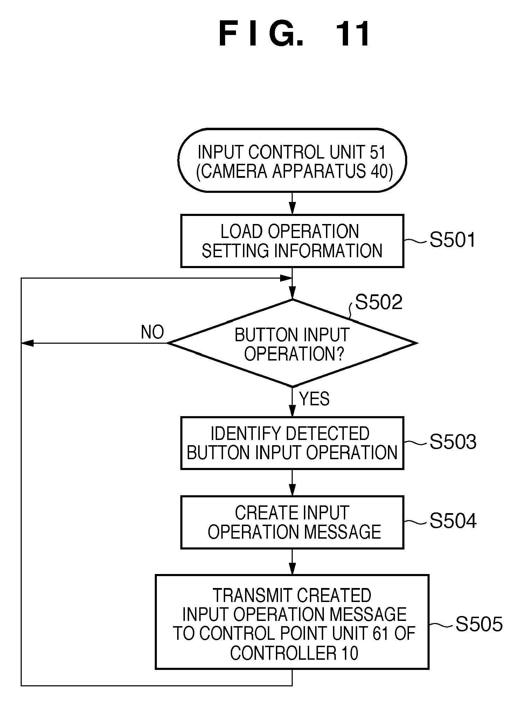

The sequence of the operation in the camera apparatus 40 will be described below using Figs. 11 to 13. An example of the sequence of the operation in the input control unit 51 will be described first using Fig. 11.

Upon startup, the input control unit 51 reads out operation setting information for itself from a specific file (a system database such as a registry depending on an OS) and starts its operation based on the readout information (step S501). Note that the input control unit 51 operates by temporarily overwriting some setting items by information received from the connected controller 10.

The input control unit 51 waits until the user makes an input operation of the buttons 49 arranged on the camera apparatus 40 (NO in step S502). If the user makes a button input operation (YES in step S502), the input control unit 51 detects that input operation, and identifies the operated button (step S503). The input control unit 51 creates an input operation message based on the identification result (step S504). The input operation message includes identification information of the button that has undergone the input operation, that of video data selected by the button input operation, and the like.

After creation of the input operation message, the input control unit 51 transmits the created input operation message to the control point unit 61 of the controller 10 (step S505). After that, the process returns to step S502, and the input control unit 51 waits for detection of a button input operation. Upon reception of the input operation message, the control point unit 61 of the controller 10 interprets and executes this input operation message. As a result, the input control unit 51 of the camera apparatus 40 and the control point unit 61 of the controller 10 operate in collaboration with each other.

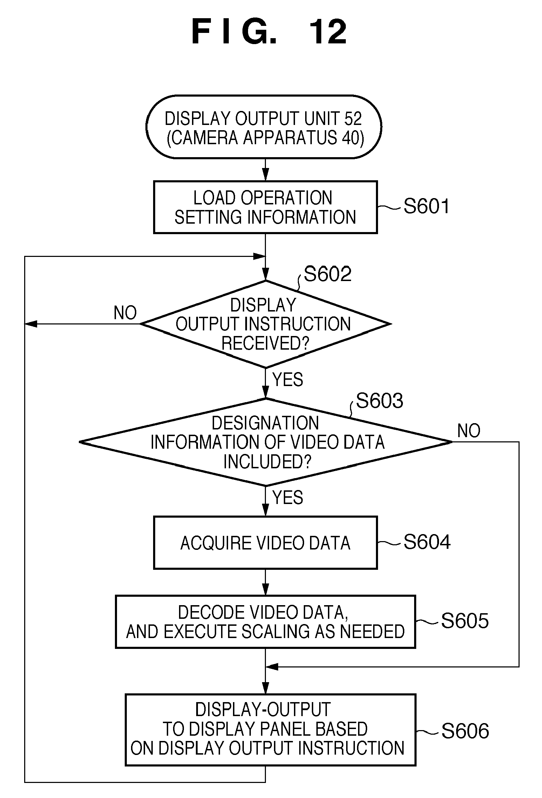

An example of the sequence of the operation in the display output unit 52 will be described below using Fig. 12.

Upon startup, the display output unit 52 reads out operation setting information for itself from a specific file (a system database such as a registry depending on an OS) and starts its operation based on the readout information (step S601).

The display output unit 52 waits for reception of a display output instruction from the control point unit 61 of the controller 10 (NO in step S602). Upon reception of a display output instruction (YES in step S602), the display output unit 52 determines whether or not the instruction includes instruction information of video data. If the instruction does not include any instruction information of video data (NO in step S603), the display output unit 52 makes a display output onto the display panel 48 based on the display output instruction (step S606). If the instruction includes instruction information of video data (YES in step S603), the display output unit 52 acquires video data designated by that instruction from, for example, the video management unit 53 of the camera apparatus 40 (step S604). The display output unit 52 decodes the acquired video data based on the display output instruction received in step S602. Note that the display output unit 52 also executes scaling as needed (step S605).

Upon completion of the processing such as decoding, the display output unit 52 outputs a screen including the video data to the display panel 48 of the camera apparatus 40 to display it (step S606) After that, the process returns to step S602, and the display output unit 52 waits for reception of a display output instruction. Note that the instruction for the video data has been explained, but the same processing is executed upon handling audio data and the like.

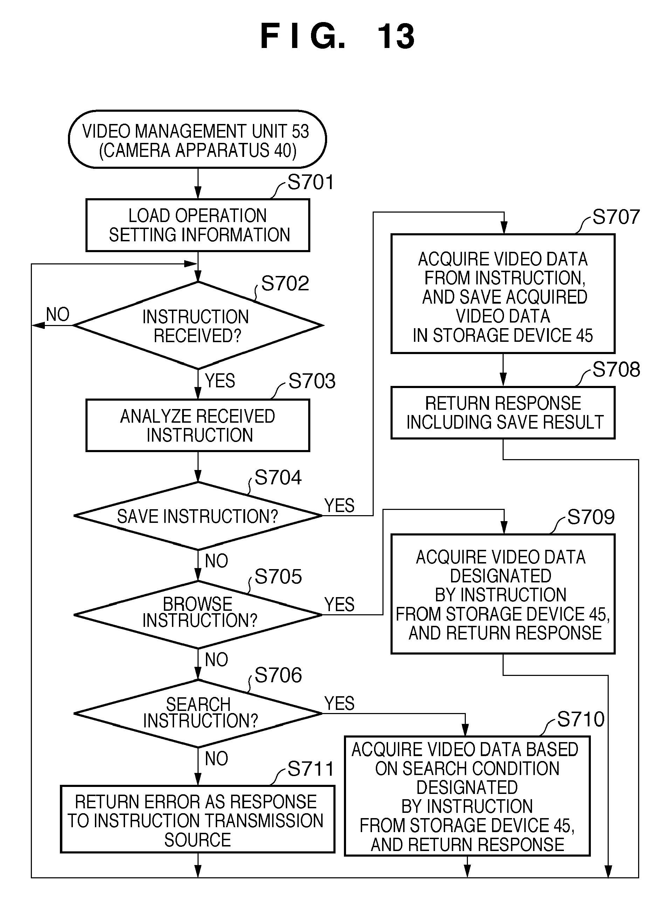

An example of the sequence of the operation in the video management unit 53 will be described below using Fig. 13.

Upon startup, the video management unit 53 loads operation setting information for itself from a specific file (a system database such as a registry depending on an OS) (step S701). After that, the video management unit 53 operates based on that operation setting information.

After the startup, the video management unit 53 waits until reception of a save, browse, or search instruction with respect to video data (NO in step S702). This instruction is issued by, for example, the control point unit 61 of the controller 10, the camera adapter unit 73 of the television apparatus 20, or the display output unit 52 of the camera apparatus 40. Note that the video management unit 53 communicates with the camera adapter unit 73 of the television apparatus 20 via the controller 10, as described above.

Upon reception of any of the above instructions (YES in step S702), the video management unit 53 analyzes the instruction, and identifies if the received instruction is any of save, browse, and search instructions (step S703).

As a result of analysis, if the received instruction is a save instruction (YES in step S704), the video management unit 53 saves received video data appended to the instruction in the storage device 45 (step S707), and returns a response including success or failure of the save processing to the instruction transmission source (step S708). If the save processing has succeeded, the response includes an identifier of the corresponding video data.

If a browse instruction is received (YES in step S705), the video management unit 53 acquires video data designated by that instruction (designated by a video data identifier) from the storage device 45, and returns a response including that video data to the instruction transmission source (step S709).

If a search instruction is received (YES in step S706), the video management unit 53 searches the storage device 45 for video data which satisfy a search condition designated by the instruction, and returns a response including the search result (a set of video data identifiers) to the instruction transmission source (step S710). Note that if the instruction received in step S702 corresponds to none of the above instructions (NO in step S706), the video management unit 53 returns an error to the instruction transmission source (step S711). After that, the process returns to step S702, and the video management unit 53 waits for reception of an instruction.

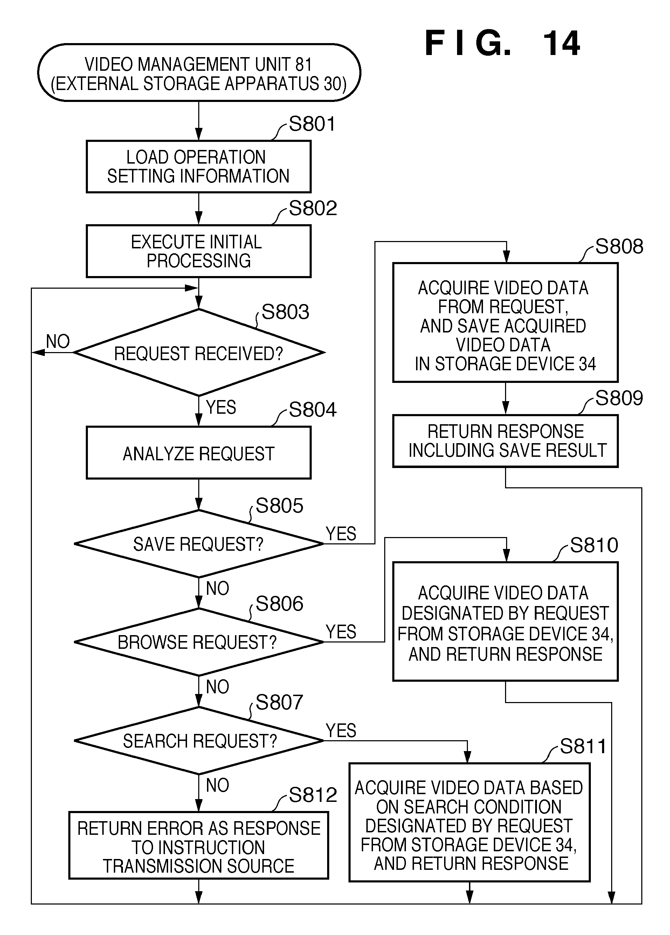

Fig. 14 is a flowchart showing the sequence of the operation in the external storage apparatus 30. In this case, an example of the sequence of the operation in the video management unit 81 will be described below.

Upon startup, the video management unit 81 loads operation setting information for itself from a specific file (a system database such as a registry depending on an OS) (step S801). After that, the video management unit 81 operates based on that operation setting information.

The video management unit 81 executes initial processing according to this operation setting information (step S802). For example, the video management unit 81 opens a communication port used to accept a request. Next, the video management unit 81 waits for reception of a request (NO in step S803). The request requests to, for example, save, browse, or search for data. The request is sent from, for example, the camera adapter unit 73 of the television apparatus 20. If an arbitrary request is received (YES in step S803), the video management unit 81 analyzes the request to identify if the received request is any of save, browse, and search requests (step S804).

As a result of analysis, if a save request is received (YES in step S805), the video management unit 81 saves received video data appended to that save request in the storage device 34 (step S808). Then, the video management unit 81 returns a response including success or failure of the save processing to the request transmission source (step S809). If the save processing has succeeded, the response includes an identifier of that video data.

If a browse request is received (YES in step S806), the video management unit 81 acquires video data designated by that request (designated by a video data identifier) from the storage device 34. The video management unit 81 returns a response including that video data to the request transmission source (step S810).

If a search request is received (YES in step S807), the video management unit 81 searches the storage device 34 for video data which satisfy a search condition designated by the request. Then, the video management unit 81 returns a response including the search result (a set of video data identifiers) to the request transmission source (step S811). If the request received in step S803 corresponds to none of the above requests (NO in step S807), the video management unit 81 returns an error to the request transmission source (step S812). After that, the process returns to step S803, and the video management unit 81 waits for reception of a request.

As described above, according to the first embodiment, the camera apparatus 40 is connected to the controller 10, and can be used using the camera adapter function, network communication function, display function, and the like of the television apparatus 20 by remote control from the controller 10. As a result, the user can use the camera apparatus 40 by making an input operation from the controller 10 while observing the screen display, thus improving convenience.

### (Second Embodiment)

The second embodiment will be described hereinafter. The second embodiment will explain a case in which the camera apparatus 40 itself comprises a communication function with the network 100. Since most of the hardware arrangements, functional arrangements, and operations in the apparatuses in the second embodiment are the same as the contents described in the first embodiment, only differences will be explained.

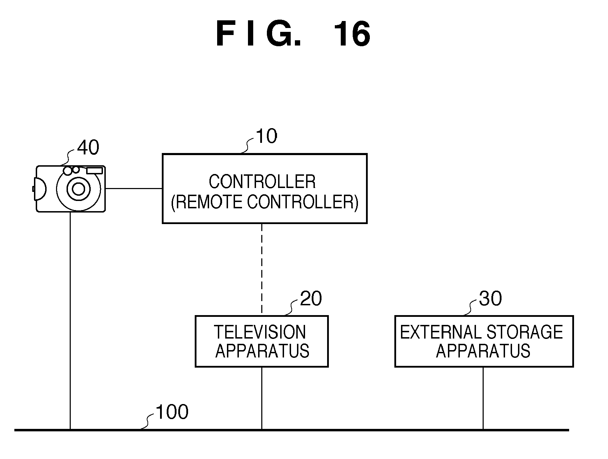

Fig. 16 is a block diagram showing an example of the overall arrangement according to the second embodiment. Note that Fig. 16 is different from Fig. 1 in the first embodiment in that the camera apparatus 40 is directly connected to the network 100. Although not shown, an access point comprising a wireless communication interface such as IEEE803.11 is connected to the network 100 and communicates with a network I/F of the camera apparatus 40. The access point may be an independent apparatus or may be built in the television apparatus 20 or the like.

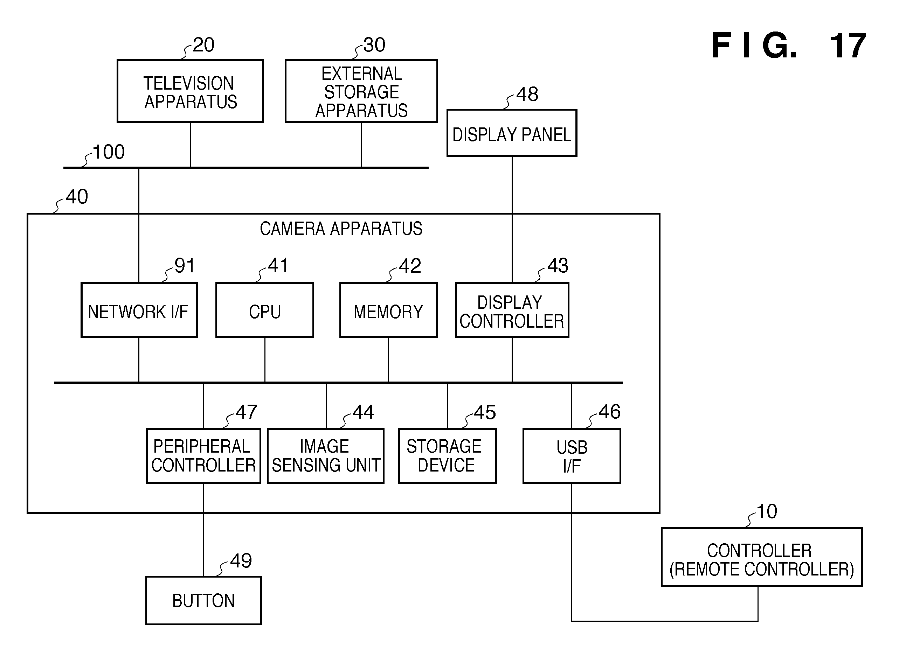

Fig. 17 is a block diagram showing an example of the hardware arrangement of the camera apparatus 40 according to the second embodiment. Fig. 17 is different from Fig. 5 in the first embodiment in that the camera apparatus 40 comprises a network I/F 91. The network I/F 91 connects the camera apparatus 40 to the network 100. For example, the network I/F 91 comprises a wireless communication interface such as IEEE803.11. Note that the network I/F 91 is not limited to a wired or wireless interface.

The camera apparatus 40 exchanges control information with the controller 10 using the USB I/F 46, and exchanges video data with the television apparatus 20 or another apparatus using the network I/F 91. That is, in the first embodiment, the camera apparatus 40 exchanges all data via the controller 10. However, in the second embodiment, the camera apparatus 40 exchanges video data and control information divisionally using the independent interfaces. Note that the camera apparatus 40 exchanges video data with the television apparatus 20 or another apparatus under the control of the control point unit 61 of the controller 10.

The sequences of the operations in the respective apparatuses according to the second embodiment will be described below. Note that the sequences of the operations in the respective apparatuses according to the second embodiment are basically the same as those described in the first embodiment. In this embodiment, only differences will be briefly described with reference to the drawings used in the description of the first embodiment.

The operation in the controller 10 according to the second embodiment is different from that of the first embodiment in that network identification information is acquired from an external device in addition to the device information in the process of step S106 shown in Fig. 7. Note that authentication information may be acquired at the same time if necessary.

The operation in the controller 10 according to the second embodiment is also different from that of the first embodiment in that upon establishment of connection between the television apparatus 20 and camera adapter unit 73, the acquired network identification information of the external device is passed to the camera adapter unit 73 in the process in step S107 shown in Fig. 7.

The operation in the television apparatus 20 according to the second embodiment is different from that of the first embodiment in that video data is directly exchanged with the camera apparatus 40 without the intervention of the controller 10 in the processes in step S207 shown in Fig. 8 and step S308 shown in Fig. 9.

The operation in the camera apparatus 40 according to the second embodiment is different from that of the first embodiment in that video data is directly exchanged with the television apparatus 20 without the intervention of the controller 10 in the processes in steps S707, S709, and S710 shown in Fig. 13.

The operation in the external storage apparatus 30 according to the second embodiment is different from that of the first embodiment in that the camera apparatus 40 and external storage apparatus 30 directly exchange video data in the processes in steps S808, S810, and S811 shown in Fig. 14.

As described above, according to the second embodiment, since the camera apparatus 40 itself comprises the communication function with the network, the camera apparatus 40 itself can exchange video data with the television apparatus 20, external storage apparatus 30, and the like directly without the intervention of the controller 10. As a result, since video data can be exchanged independently of control information exchanged via the controller 10, communications can be shared.

Upon transmitting video data, the camera apparatus 40 may convert that video data. For example, the camera apparatus 40 converts a resolution, color depth, and other attributes in correspondence with an apparatus as a video data transmission destination.

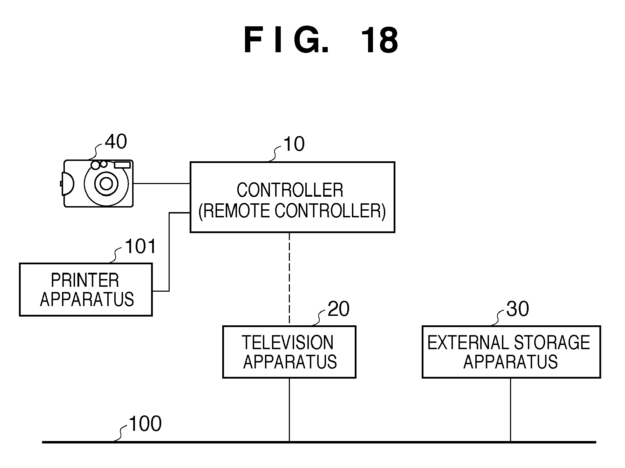

The first and second embodiments have been described. The first and second embodiments have exemplified the case in which the external device is the camera apparatus 40. However, the external device is not limited to the camera apparatus, but may be any other detachably connected device. The external device may be, for example, a printer apparatus. When a printer apparatus 101 is connected to the controller 10, as shown in Fig. 18, the user can print video data stored in, for example, the external storage apparatus 30 using the printer apparatus at hand by operating the controller 10 while observing the screen of the television apparatus 20. This processing is implemented when the control point unit 61 of the controller 10 collaborates with an external device adapter function (e.g., a printer adapter unit) of the television apparatus 20.

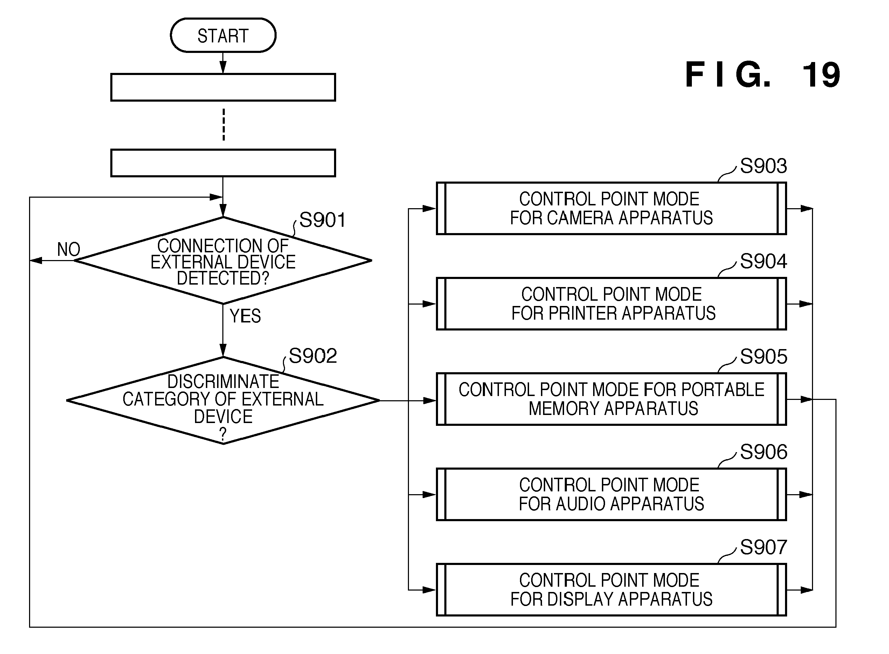

In addition to the printer apparatus, for example, a portable memory apparatus (USB memory apparatus or memory card apparatus), audio apparatus, display apparatus, and storage apparatus may be used as the external device. As described above, the controller 10 executes mode shift processing according to the connected external device. More specifically, as shown in Fig. 19, at the time of detection of an external device (step S901), the controller 10 branches the processes according to the categories of devices (step S902). Then, the process advances to a control point mode according to each category to execute the subsequent processing (steps S903 to S907).

In the first and second embodiments, the category of device such as a camera apparatus or printer apparatus is discriminated to shift the mode of the controller 10 (steps S104 and S105 in Fig. 7). However, the mode may be shifted based on information other than the category of device.

Information as discriminant criteria of the mode shift includes, for example, (1) a function of the external device (e.g., whether or not the device has an image sensing function or a save/browse function), (2) an operation mode of the external device, (3) user information of the external device (e.g., owner information), (4) contents information (e.g., the types and quantity of video data) saved in the external device, (5) the analysis result of contents information (e.g., whether or not video data that matches face recognition feature parameters of a family saved in the television apparatus are included), (6) individual identification information or model identification information (e.g., a model number) of the external device, and the like.

The first and second embodiments have exemplified the case in which the host apparatus is the television apparatus 20. However, the host apparatus is not limited to the television apparatus. The host apparatus is not particularly limited as long as it is controlled by the controller 10 and comprises an external device adapter function.

The first and second embodiments have exemplified the case in which video data (movie data) are handled. However, data to be processed may be, for example, photo data (still picture data), music data, and conversation speech data in addition to the video data.

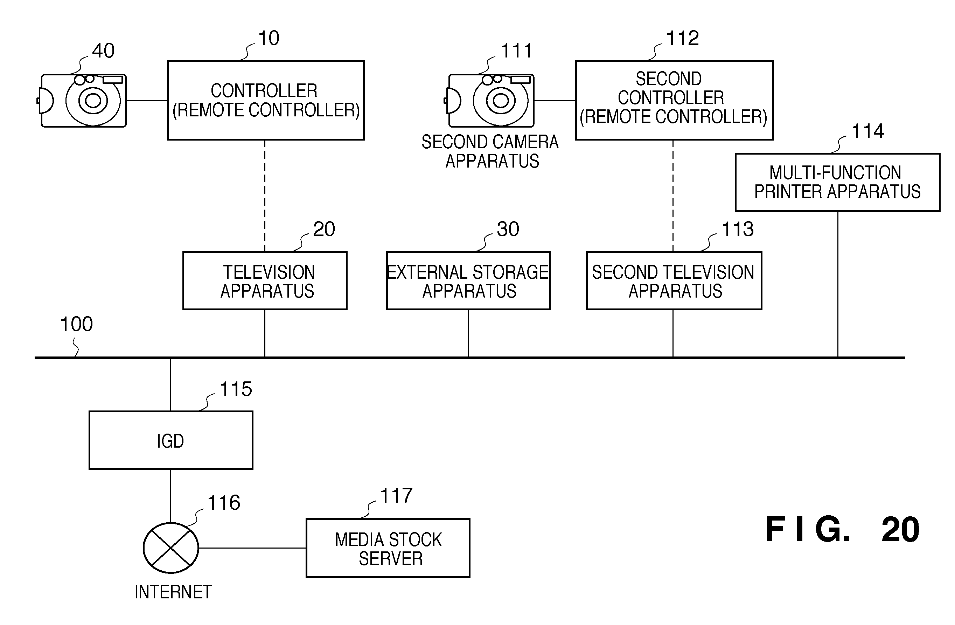

The first and second embodiments have exemplified the case in which video data stored in the camera apparatus 40 is selected by an input operation from the controller 10, and is transmitted to another apparatus (external storage apparatus 30) on the network. However, the present invention is not limited to such specific case. For example, a control point unit of a controller (the controller 10 or a second controller 112) may control to store video data stored in a second camera apparatus 111 in the camera apparatus 40 (see Fig. 20). Furthermore, the same control applies not only to video data in the second camera apparatus 111 but also to those stored in the external storage apparatus 30.

The first and second embodiments have exemplified the case in which the external storage apparatus 30 is connected to the television apparatus 20. However, an apparatus to be connected to the television apparatus 20 is not limited to the external storage apparatus 30, but any other apparatuses may be connected. For example, a printer apparatus may be connected to the television apparatus 20. Alternatively, a second television apparatus 113, a multi-function printer apparatus (MFP) 114, or a media stock server 117 allocated on the Internet 116 may be connected to the television apparatus 20 (see Fig. 20). That is, an apparatus which is connected to communication means such as a network, and can communicate with the television apparatus 20 can be connected.

The first and second embodiments have exemplified the case wherein after connection of the external device, the control point unit 61 of the controller 10 interprets an input operation from the controller 10 or the like. However, the control point unit 61 need not always interpret the input operation. For example, the controller 10 may not interpret any input operation, and may transmit an input operation as key input information to the television apparatus 20, which may interpret that input operation. In this case, the camera adapter unit 73 of the television apparatus 20 may comprise some of the functions of the control point unit 61 of the controller 10.

Note that the present invention is not limited to the aforementioned and illustrated embodiments, and can be modified as needed without departing from the scope of the invention.

The present invention can adopt embodiments in the forms of, for example, a system, apparatus, method, program, and storage medium. The present invention may be applied to either a system constituted by a plurality of devices, or an apparatus consisting of a single device.

The present invention includes a case wherein the functions of the aforementioned embodiments are achieved when a software program is directly or remotely supplied to a system or apparatus, and a computer incorporated in that system or apparatus reads out and executes the supplied program codes. The program to be supplied in this case is a computer program corresponding to the illustrated flowcharts in the embodiments.

Therefore, the program codes themselves installed in a computer to implement the functional processing of the present invention using the computer also implement the present invention. That is, the present invention includes the computer program itself for implementing the functional processing of the present invention. In this case, the form of program is not particularly limited, and an object code, a program to be executed by an interpreter, script data to be supplied to an OS (Operating System), and the like may be used as long as they have the functions of the program.

As a computer-readable storage medium for supplying the computer program, the following media can be used. For example, a floppy® disk, hard disk, optical disk, magneto-optical disk, MO, CD-ROM, CD-R, CD-RW, magnetic tape, nonvolatile memory card, ROM, and DVD (DVD-ROM, DVD-R) can be used.

As another program supply method, the user establishes connection to a homepage on the Internet using a browser on a client computer, and downloads the computer program of the present invention from the homepage onto a recording medium such as a hard disk. In this case, the program to be downloaded may be a compressed file including an automatic installation function. Also, program codes that form the program of the present invention may be segmented into a plurality of files, which may be downloaded from different homepages. That is, the present invention includes a WWW server which makes a plurality of users download program files required to implement the functional processing of the present invention on their computers.

Also, a storage medium such as a CD-ROM, which stores the encrypted program of the present invention, may be delivered to the user. In this case, the user who has cleared a predetermined condition may be allowed to download key information used to decrypt the encrypted program from a homepage via the Internet. The user executes the encrypted program using that key information to install the program in a computer.

The functions of the aforementioned embodiments can be implemented when the computer executes the readout program. In addition, the functions of the aforementioned embodiments may be implemented in collaboration with an OS or the like running on the computer based on an instruction of that program. In this case, the OS or the like executes some or all of actual processes, which implement the functions of the aforementioned embodiments.

Furthermore, some or all of the functions of the aforementioned embodiments may be implemented when the program read out from the recording medium is written in a memory equipped on a function expansion board or a function expansion unit, which is inserted into or connected to the computer. In this case, after the program is written in the function expansion board or unit, a CPU or the like equipped on the function expansion board or unit executes some or all of actual processes based on an instruction of that program.

According to the present invention, an external device is connected to a controller, and can be used using various functions of a host apparatus by remote control from the controller, thus improving convenience.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions. A controller(10) has a connection interface used to connect an external device(40), changes an operational profile of an operation means(16) to that according to the external device(40) connected by the connection interface, and controls a host apparatus(20) based on an input operation from the user at the operation means(16), the operational profile of which is changed.

## Claims

1. A controller(10) for remote-controlling a host apparatus(20), comprising:
a connection means(14) for connecting an external device(40);
a changing means(11,61) for changing an operational profile of an operation means(16) to an operational profile according to the external device(40) connected by said connection means(14); and
a control means(11,61) for controlling the host apparatus(20) based on an input operation from a user at the operation means(16), the operational profile of which is changed by said changing means(11,61).

2. The controller(10) according to claim 1, wherein said control means(11,61) comprises:
a generation means(11,61) for generating, as a request, an instruction content according to the operational profile changed by said changing means(11,61) based on an input operation from the user at the operation means(16); and
a transmission means(13) for transmitting the request generated by said generation means(11,61) to the host apparatus(20), and
said control means(11,61) controls the host apparatus(20) by transmitting the request to the host apparatus(20) by said transmission means(13).

3. The controller(10) according to claim 1, wherein the control of the host apparatus(20) by said control means(11,61) includes processing for exchanging data between the host apparatus(20) or an apparatus(30) connected to the host apparatus(20), and the external device(40) connected by said connection means(14).

4. The controller(10) according to claim 3, wherein the data is exchanged between the host apparatus(20) or the apparatus(30) connected to the host apparatus(20), and the external device(40) connected by said connection means(14) via said connection means(14).

5. The controller(10) according to claim 3, wherein the data is directly exchanged between the host apparatus(20) or the apparatus(30) connected to the host apparatus(20), and the external device(40) connected by said connection means(14).

6. The controller(10) according to claim 1, wherein the control of the host apparatus(20) by said control means(11,61) includes processing for controlling the host apparatus(20) to display a screen associated with an operation of the external device(40) connected by said connection means(14).

7. The controller(10) according to claim 1, wherein the control of the host apparatus(20) by said control means(11,61) includes processing for controlling the host apparatus(20) to display a selection screen used to select a specific apparatus from a plurality of apparatuses, and controlling the specific apparatus selected from the selection screen and the external device(40) connected by said connection means(14) to exchange data.

8. The controller(10) according to claim 7, wherein the control of the host apparatus(20) by said control means(11,61) includes processing for controlling the host apparatus(20) to display a list of apparatuses based on information detected by the host apparatus(20) or information set in advance in the host apparatus(20) on the selection screen.

9. The controller(10) according to claim 1, wherein the control of the host apparatus(20) by said control means(11,61) is executed based on setting information received from the external device(40) connected by said connection means(14).

10. The controller(10) according to claim 1, wherein the control of the host apparatus(20) by said control means(11,61) is executed based on setting information received from the host apparatus(20).

11. A control system which comprises a host apparatus(20) and a controller(10),
said controller(10) comprising:
a connection means(14) for connecting an external device(40);
a changing means(11,61) for changing an operational profile of an operation means(16) to an operational profile according to the external device(40) connected by said connection means(14); and
a control means(11,61) for controlling the host apparatus(20) based on an input operation from a user at the operation means(16), the operational profile of which is changed by said changing means(11,61),
wherein said host apparatus(20) executes processing associated with the external device(40) connected by said connection means(14) under the control of said control means(11,61).

12. A control method (10) for remote-controlling a host apparatus(20), comprising the steps of:
changing an operational profile of an operation means(16) to an operational profile according to an externally connected external device(40); and
controlling the host apparatus(20) based on an input operation from a user at the operation means(16), the operational profile of which is changed.
